# EUROPEAN PATENT APPLICATION

(11) **EP 4 841 213 A1**
(43) Date of publication of application: **18.11.2026**
(21) Application number: 25176621.8
(22) Date of filing: 15.05.2025
(51) Int. Cl.: G01C 15/00, G01C 21/20, G01C 21/00, G01S 7/48, G01S 17/66, G01S 17/89, G01C 15/04

(54) **CONTROL POINT DATA MANAGEMENT FOR A PLURALITY OF SURVEYING DEVICES**

(71) Applicant: Leica Geosystems AG, 9435 Heerbrugg (CH)
(72) Inventor: METZLER, Bernhard, 6850 Dornbirn (AT)
(74) Representative: Kaminski Harmann

(57) **Abstract**

The invention relates to a surveying system for generating a point cloud representing a setting. The scene comprises a set of real-world objects. The system comprises a plurality of surveying devices and a data management server. The data management server stores a set of control points each associated with a unique ID and with pose data. The plurality of surveying devices comprises a first and a second surveying device. The first surveying device is configured to generate a first control point associated with a first unique ID and the first control point position data, and to send said data for the data management server for an updating of an existing or a generation of a new set of control points. The second surveying device is configured to generate position data for a set of object points in the setting based on the scanning data and its pose data. The second surveying device is further configured to derive its pose data using an identifying of nearby control points and receiving corresponding data from the data management server.

## Description

### FIELD OF THE INVENTION

The present invention relates to a surveying system comprising a plurality of surveying instruments, particularly at least two different types of surveying instruments, and a data management server. The invention also relates to a method of data exchange between said components.

### BACKGROUND OF THE INVENTION

To capture topographic information, in particular a surface of an object, in setting, in particular a building or a construction site, scanning methods are typically utilized. The topography is typically represented by a contiguous point cloud. A common method for scanning surfaces is the utilization of scanning instruments or modules, in particular laser scanners. The scanning instrument scans the surface of objects with a scanning beam, in particular laser-beam, and the topography is generated by combining the measured distance information with emission angles of the scanning beam.

Laser scanning instruments and methods for their utilization are known in the prior art and are disclosed for example in WO 97/40342. The scanning is typically executed by deflecting the beam with an appropriate optical element, for example a fast-rotating mirror. One typical utilization of the scanning instruments is so that they are mounted on a fixed basis comprising at least one further motorized axis to change, measure and record the emission angle in two degrees of freedom. The location of the scanning instrument can be properly determined using known stationing methods, particularly based on appropriate matching of a multitude of point clouds. The point cloud thus delivered is referenced to the appropriate local or global coordinate system and can be merged with further data, including further point clouds.

Capturing a large point cloud, e.g. an entire construction site, based on a large number of individual scans from such stationary locations is not only cumbersome, but also requires extensive pre-planning to avoid blind spots and achieve the required coverage. Therefore, alternative approaches based on mobile scanning instruments and pose tracking have also been developed. Mobile scanning instruments in the sense of the invention particularly cover autonomous and/or remote-controlled robots, autonomous and/or remote-controlled unmanned aerial vehicles (UAV), autonomous and/or remote-controlled unmanned ground vehicles (UGV), wearable and/or handheld scanning instruments. Conventional geodetic surveying devices might also possess pose tracking options, e.g. EP 3 779 357 B1 discloses a geodetic surveying instrument with pose tracking capabilities.

Pose tracking might be performed with the aid of an external signal, particularly GNSS- or WLAN-based signal. However, this requires the availability of such external signals, which could be problematic, e.g. within a large building under construction. Therefore, having an internal pose tracking system, e.g. in the form of an inertial navigation system (INS), visual position tracking system (VPS) or visual-inertial positioning system (VIPS) is preferable. However, such systems determine position and orientation by integrating displacement and/or velocity and/or acceleration data and therefore drift by nature.

Providing control points with known position or pose data to reset such drifts is known in the state of the art. In some prior art methods adhesive markers are provided to well-accessible locations of the construction side. Respective positions of said adhesive markers are then determined using a high precision surveying instrument, such as a total station. The coordinate data and some identification data, e.g. a serial number of the marker, are then manually entered into a notebook. In these prior art methods, the notebook can be either a digital or a paper-based notebook. In a subsequent scanning the mobile scanning instrument uses these known markers to reset its drift. For that the data stored in the notebook must be added manually, either inline during the scanning process or subsequently during the data processing.

A disadvantage of the prior art method is that there are separate workflows for capturing control points and integrating the coordinates into the processing of mobile scanning data. Moreover, the process includes several manual steps which are time consuming and error prone. Particularly for handheld or wearable devices control points are introduced in the processing of the scanning trajectory but are difficult to add on-site. For automated scanning, e.g. by autonomous robots, integrating such control points is challenging.

### OBJECT OF THE INVENTION

In view of the above circumstances, an object of the present invention is to provide an improved scanning system and scanning method, by at least partially eliminating the manual steps.

A further objective of the present invention is an automated maintenance of the control point related information on the basis of the performed scanning action.

These objectives are at least partly achieved by realizing the characterizing features of the independent claims. Features which further develop the invention in an alternative or advantageous manner are described in the dependent claims.

### SUMMARY OF THE INVENTION

The invention relates to a surveying system for generating a point cloud representing a setting. The setting comprises a set of real-world objects and the point cloud represents their spatial extent and geometric relationship with each other. The point cloud might be a dense point cloud. In other words, the point cloud can be displayed and interpreted as a continuous surface. Particularly, the point cloud might enable the generation of derived two- or three-dimensional products, such as floorplans, building information models, pipe models etc. Point clouds within the meaning of the invention can be used in particular to obtain, directly or indirectly via such derived products, comparisons between the state of the setting at two different points in time in order to monitor a progress of the setting and/or to obtain comparisons between a planned state of the setting with the actual state of the setting in order to detect deviations from the planned setting.

The system comprises a plurality of surveying devices and a data management server. The plurality of surveying devices comprises a first and a second surveying device. The skilled person knows that the components of the system do not necessarily have to be located in close proximity to each other, in particular the data management server can be a system remote from the surveying instrument, e.g. located at company headquarters and/or at external providers of computer resources, particularly as a cloud computing resource. The data management server might be realized as a virtual cluster or by similar alternatives. Furthermore, neither the data management server nor the surveying instruments must be realized as unit elements but can consist of physically separate components. In particular, the surveying instruments can consist of external computing units or additional measuring elements, e.g. measuring poles or external tracking devices. It is also possible that the first and second surveying devices are used in different phases, i.e. they may not be communicatively connected to the data management server simultaneously, but in a sequential manner. Moreover, a surveying device or a field computer associated with it might act as a master device, both as a permanent master device or a temporarily master device. Such master device can provide partly or fully the functions associated with the data management server. In that case the surveying device might also be considered to be the data management server. Alternatively, a surveying device might act as a master communication interface and each communication with the data management server might be realized through this master communication interface. The present invention is not limited to any specific implementation.

For reasons of transparency and conciseness only embodiments in which a single first surveying device and a single second surveying device coupled simultaneously and in a continuous manner to the data management server will be described in detail. The features of alternative embodiments, particularly relating to one or more of the above-mentioned alternatives can be applied correspondingly.

The data management server is configured to store digital data about the setting. Said digital data comprise a set of control point data associated with a set of control points. The control point data comprise at least a unique identified (ID) and position data associated with a given control point. Preferably the positions data meets geodetic accuracy standards. An example of such geodetic accuracy standards are maintained by the Federal Geographic Data Committee (https://www.fgdc.gov/standards/projects/accuracy/). From here on the term "control point" will refer to real-world objects, such fiducial markers or cardinal features such as corners, and the term "control point data" will refer to such associated data. The control point data can be processed by the surveying systems substantially automatically. The data management server is configured to update the set of control point data based on control point data received from the surveying devices. Updating the set of control point data might comprise an automatic distribution of said data to the plurality of surveying devices or to a subset communicatively coupled with the data management server.

The unique ID enables unambiguous identification of control points by surveying devices belonging to the surveying system. In other words, each unique ID associated with a control point of the set differs from any other unique IDs associated with further control points of the set. Unique IDs might be passively identifiable, e.g. they have a different visual appearance. Actively communicating unique IDs, such as RFID tags are also possible for a system according to the invention. The unique ID might be based on a specific tag actively placed on the control point location, e.g. a marker glued to a surface and/or a symbol drawn on the wall, in particular an alphanumerical symbol such as a number. The unique ID can also be based on a pre-existing feature such as an image taken from a corner. Moreover, the unique ID might also comprise information regarding a coarse position of the control point, e.g. a corner of a window located in the second floor. The skilled person also understands that the data management server might assign a further, internal reference to the control points of the set allowing a querying of the control points.

Each surveying device comprises a communication unit for establishing data exchange with the data management server. In the following, only those embodiments are described in detail in which a possibility of uninterrupted communication between the data management server and the surveying device exists. The specific properties of further embodiments, e.g. wherein the communication is realized in batches are correspondingly applicable. Particularly, the surveying devices might download, store and process copies of parts of digital data representing the setting.

The first surveying device is configured (i) to generate a first control point and associate the first control point with first control point data comprising at least a respective first unique ID and first control point position data, and (ii) to send, using a communication unit of the first surveying device, the first control point data to the data management server. The data management server is configured to update the set of control point data based on the received first control point data. Generating a control point in the sense of the invention also covers the case wherein a pre-existing landmark is designated as a control point.

In other words, the first surveying device can be used to create data to generate or update the set of control point data. Updating in this context means extending the set of control points by the inclusion of the newly generated first control point. Further options to manage the sets of control points might also be possible and will be discussed later. By way of example, the unique ID might be an adhesive reference marker with an at least locally unique visual pattern. Locally unique in the sense of the invention means that the system and/or the setting comprise no further identical object. The unique visual pattern might be perceivable by both the first and second surveying devices. The unique visual pattern is distinguishable from the other visual patterns associated with further control points by said surveying devices. The reference markers might also comprise a reference area whose position is associated with control point. The reference area might also be identifiable by the surveying devices.

The skilled person understands that the control point data might also comprise timestamps representing time intervals during which given control point data can be utilized for pose correction of a scanning device, deriving point clouds or derivative data. By way of example, it is advantageous to regularly scan construction sites or industrial plants to monitor the changes. Some developments in the setting might lead to a shift of a control point. For such situations it is beneficial to store a control point with first coordinates valid in a first time interval and second coordinates valid in a second time interval. Thus, for processing point cloud data stemming from the first time interval the first coordinates might be used to represent the control point. For processing point cloud data stemming from the second time interval the second coordinates might be used to represent the control point. The skilled person understands that providing two sets of control points valid at different time intervals is essentially identical with the above-described workflow.

The first surveying device might be a high-precision surveying device such as a laser tracker, a total station or a global navigational satellite system (GNSS) receiver configured for high precision pose measurements, e.g. based on real time kinematics. Moreover, during the generation of such position data the first surveying device is operated in a manner to capitalize its higher precision. Particularly the device might be stationed thoroughly. The skilled person understands that cost and time efficiency are less important in this subtask than measurement accuracy, as only a few control points are generated which are then subsequently used to improve the measurement data generated by the further surveying devices.

The second surveying device comprises a pose determination unit providing pose data of the second surveying device and a scanning unit for deriving scanning data.

Scanning in the sense of the present invention relates to the action of obtaining measurement data for the object points of the point cloud. In the particular case of laser scanners the scanning comprises an emission and reception of a scanning signal, particularly a laser pulse, and providing coordinate data for an object point, e.g. based on the emission angle(s) and the time of flight of the laser pulse. Scanning data in this sense represents raw measurement data or processed data used for the generation of the point cloud. The scanning unit represents the ensemble of hardware components, e.g. optical, electronic and mechanical components, and software components required for these operations. Scanning data in the sense of the invention is not limited to point clouds, let alone dense point clouds. The skilled person understands that a set of single point data provided by a geodetic surveying instrument, by way of example for providing anchor points for a point cloud, is also scanning data in the sense of the invention. A total station is an embodiment of such a system, which can deliver this type of high precision data as scanning data.

The pose determination unit in the sense of the invention might be an internal pose tracking unit providing pose data in real time. A surveying device configured to perform a stationing, e.g. determining its static pose by determining relative coordinate data of landmarks with known absolute coordinate data, also comprises a pose determination unit in the sense of the invention. Absolute data in the sense of the invention represents coordinate data referenced to the external reference system. Moreover, a terrestrial laser scanner delivering high-quality point cloud from which its acquisition pose can be backtracked, e.g. based on matching said point cloud with an external reference system, also comprises such pose determination unit. Even if the pose is only implicitly recorded in the sense that it is known that all the scan data is recorded from a given pose. The pose determination unit must not explicitly determine, let alone provide, the pose of the surveying device continuously during the surveying workflow. By way of example, only the embodiments, wherein the pose determination unit is embodied as a pose tracking unit will be described in more detail. The skilled person can apply the required modifications based on common general knowledge in case a different type of pose determination unit is used.

A pose tracking unit in the sense of the invention provides pose information for adjusting the above-mentioned scanning data to derive the point cloud. Pose tracking might be based on external tracking signals, such as GNSS signals or signals from laser tracking units, or they might be based on internal data such as data provided by INS or VPS. Owing to the signal independent nature systems which are based at least partly on internal data are advantageous where such external signals are difficult or impossible to provide. By way of example, from here on it is assumed that the tracked pose is provided on the basis of such internal data.

The second surveying device is configured to (i) to generate position data for a set of object points in the setting based on the scanning data and the pose data, (ii) to identify a second control point of the set of control points based on a second unique identifier associated with the second control point, (iii) to access, using a communication unit of the second surveying device, second control point position data associated with the second control point from the data management server, and (iv) to derive the pose data and/or an uncertainty of the pose data under consideration of a measured relative position of the second control point and the second control point position data.

It is clear for the skilled person that the above workflow contains both the cases, (i) when the control point related information is specifically queried from the data management server upon the identification of the control point, and (ii) when the server is pushing all available control point data to the second surveying device and the query takes place locally on the surveying device. A combination of the two might also take place, i.e. the server pushes a subset to the surveying device upon the identification of a specific control point, particularly a subset representing nearby control points. The latter might be especially advantageous, when the second unique ID comprises an image of the second control point and the identification is performed based on computer vision and/or image matching. Parsing through only the nearby visual features not only reduces the computational load but also reduces the risk of misidentifications.

The skilled person understands that the differentiation between the first surveying device with the first control point and second surveying device with the second control point is situational. The first surveying device generates information associated with the first control point while the second surveying device utilizes the information associated with the second control point. I.e. the same real world control point takes the role of a first control point when the associated information is generated or updated, and a second control point, when said information is provided for a surveying device for determining its pose. In the same manner the same surveying device might take the role of a second surveying device, when it utilizes the control points to determine its pose, whereafter it acts as a first surveying device when it generates new control points, particularly checkpoints.

While not limited to the present invention it is especially beneficial for mobile, e.g. wearable, handheld or self-propelling, survey devices with continuous pose tracking. Such pose tracking is often based on internal sensors which drift with time. Such sensor drift can be corrected by measuring the relative pose of the control point and comparing it with the known absolute pose. Measuring the relative pose of the first control point with respect to the second surveying device can be performed using the scanning unit, the pose tracking unit or an additional component. Particularly, if the control point is identified in the scanning data, the adjustment of the tracked pose can be performed on the fly and with the precision of the laser scanning data itself. Alternatively or additionally, the pose derivable from measuring the relative position of the control points might be use in a post-processing step to reconstruct the true scanning trajectory of the second surveying device. This reconstruction can comprise a back projection similarly to that of performed in part of a loop closure.

A subset of the control points might be used as checkpoints. The coordinates of the checkpoints might be known with lower precision than that of the further control points. Such checkpoints might be used for estimating an uncertainty of the pose data provided by the pose determination unit. The pose uncertainty data might be logical or similar data, i.e. only a true/false value or simplified numerical data is used to represent the pose uncertainty. By way of example, this might be carried out on the basis of line-of-sight measurements, i.e. whether the checkpoint is successfully located within a pre-defined cone of sight. Unless otherwise provided, the generic term control points cover the above-mentioned checkpoints also. Particularly any control point can be used as a mere checkpoint. Where distinction is required the non-checkpoint control points will be referred to as control points used in pose determination/adjustment. A part of the control points might be provided with lower measurement precision, particularly when said control points are used as checkpoints. The position data associated with the control points might comprise uncertainty data. Alternatively or additionally, the unique IDs might contain information regarding the nature of the control points, i.e. that they can only be used as checkpoints.

Performing adjustments on the fly and thus providing for the surveyor(s) on the field the correct pose is preferable. However nothing prevents corresponding synchronizing and/or timestamping the scanning data and tracked pose data and performing an adjustment during post-processing.

In some embodiments, the system further comprises a set of markers associated with the corresponding control points. Each marker comprises an optically perceptible area displaying data representing unique IDs of the respective control points. It is clear to the skilled person that each marker of the set is unique owing to the unique information provided by the corresponding optically perceivable areas. The markers, by their real-world pose, correspond to the control points and the unique optically perceptible areas correspond to the unique IDs. Owing to this correspondence the two terms might be used interchangeably, where this improves transparency and conciseness of the description.

Optically perceptible in the sense of the invention means that (i) imaging elements of the surveying devices, which include both targeting units, scanning units and auxiliary imaging units, are capable to acquire image data regarding said optically perceptible areas, and (ii) the surveying devices can automatically derive the unique IDs on the basis of said image data. Preferably said optically perceptible area comprises a machine-readable code, as they are less susceptible to damage. Nevertheless, the invention is applicable to cases where the optically perceptible area comprises alphanumerical symbols, or even handwritten notes, if the above requirements are fulfilled.

In some specific embodiments, the markers are embodied as sheets comprising a reflective layer on a first side and an adhesive layer on a second side opposite the first side. Alternatively or additionally, the markers comprise corresponding targeting areas, in particular embodied as a crosshair or a specific corner, configured to be targeted by the first surveying device during the determination of the first control point position data. Alternatively or additionally, the optically perceptible area is embodied as a barcode, or a QR code. In the sense of the invention, fiducial markers for augmented reality, computer vision or autonomous navigation, such as ARToolKit, ARTag, ArUco, AprilTag, WhyCon, WhyCode etc. markers, are considered to be modification of the QR-code type. QR-code in the sense of the invention, except when explicitly referred to the contrary, meant to include these types of markers also.

In some specific embodiments, each surveying device comprises an imaging unit. The imaging units are configured to acquire control point image data, particularly as photographic images, regarding the optically perceptible area. The data management server is configured to retrieve the data associated with the control points based on the control point image data. The image data might comprise data regarding the environment of the marker. This is especially useful when the second surveying device is carried by a human operator. By way of example, the location of the next control point might be displayed to the operator in the form of a visual guide, enabling the easy localization and identification of the control point. A further advantage of storing an associated image, particularly with environmental information, is that the degradation of the marker can be easily verified by comparing the stored image with the current state. Moreover, if the image comprises environmental information enabling the identification of the supposed location of the marker the non-presence of the marker can be determined with higher confidentiality.

In some specific embodiments, the first surveying device comprises an imaging unit. The imaging unit of the first surveying device is configured to acquire first control point image data regarding the optically perceptible area. The first control point data comprises the first image data and thus submitted to the data management server. By way of example, the data management server is configured to retrieve the data associated with the control points based on the control point image data. In other words, the first surveying device is configured to perform a generation of the control points in a manner that images regarding the control points are also provided in addition to the position data and the unique ID. Alternatively the image or a part of the image may act as the unique ID.

In some specific embodiments, the markers comprise corresponding alignment indicators indicating local coordinate systems of the markers. In particular the markers are embodied as fiducial markers, more particularly as ArUco markers. In such markers not only the position, but also the orientation representing said local coordinate system of the control point can be recorded. The second surveying device is further configured to access second control point orientation data. The second surveying device is configured to derive the pose data and/or an uncertainty of the pose data of the second surveying device further considering a measured relative orientation of the second control point and the second control point orientation data. The skilled person can modify any of the embodiments disclosed here in a straightforward manner for such cases.

In some specific embodiments, the first surveying device is embodied as a total station. Total stations are known geodetic devices configured to provide coordinate data regarding single points with at least centimetric, particularly millimetric or better precision. Total stations essentially comprise targeting elements, single point distance measuring elements, in particular laser rangefinders, and angle sensors, with accuracy in the range of angular seconds. A targeting unit is understood to be an ensemble that can sight, aim, and measure one or more individual point, particularly control points. The targeting unit might be a single, integrated component of the total station, in particular co-axial sighting and single point distance measuring elements, in particular laser rangefinders.

To sight and target a designated target point, e.g. a crosshair of a reference marker, generic total stations are equipped with a telescopic sight such as optical telescope. The telescopic sight can be aligned with the target point by pivoting and tilting the total station. By way of example, such a sighting device is described in EP 2 219 011. The spherical coordinates of the target points are then determined. A distance of the targeted object is determined by a range finding method, in particular with a laser rangefinder, while elevation and azimuth angles might be derived from angle readings provided by the angle sensors comprised by the survey instrument, in particular comprised by the targeting unit.

The first surveying instrument can be an alternative instrument such as a laser tracker, or even a properly stationed terrestrial scanner.

In some embodiments, the second surveying device is configured to generate the position data for the set of object points during a continuous proper motion along a scan trajectory. In other words, the second surveying system is carrying out the scanning such that it has no fixed pose, particularly a fixed pose which is stationed as known in geodetic measurements. As such stationing is time consuming, performing the scanning in such manner is more time efficient. In particular, by providing automatically identified control points that can be used to reset the drift of the pose tracking data, the present invention enables such scans to be performed even more smoothly and naturally. Performing the identification of the control points and the resetting of the drift by remote sensing, e.g. image or laser-based measurements, is even more beneficial as an effort to approach the control points can also be reduced or ideally completely omitted. Alternatively, the drift might not be corrected, however it is monitored by checking the pose uncertainty, at least with respect to a line-of-sight direction. This can be performed by comparing the expected and measured relative position of known checkpoints based on the continuously tracked pose of the second surveying device and the known absolute position of the checkpoints.

In some specific embodiments, the second surveying device is configured (i) to be mounted to or integrated with a UAV and/or (ii) to be mounted to or integrated with a UGV, and/or (iii) to be mounted to or integrated with a mobile robot, and/or (iv) to be wearable by a human, in particular to be embodied as or mounted into a backpack or an exoskeleton, and/or (v) to be holdable by a single hand.

In some embodiments, the pose tracking unit comprises a VPS. In some specific embodiments (i) the VPS comprises a simultaneous localization and mapping functionality, and/or (ii) the VPS is configured to track the identified control points based on a visual tracking of the respective unique IDs, and/or (iii) the pose tracking unit further comprises an INS cooperating with the VPS. Having a VPS which can automatically recognize the control points and provide a tracking based on one or more control points with known absolute position is beneficial as the drift-free period of the VPS can be extended. Particularly for environments with many control points the second surveying device might have a constant line of sight with at least one control point for the majority of the scanning task.

In some embodiments, the set of control points comprises a subset of checkpoints. The second surveying device is configured to derive an uncertainty of the pose data under consideration of a measured relative position of one or more checkpoints.

By way of example, the above-mentioned mobile surveying device with pose tracking unit might quickly provide measured information regarding an uncertainty of the tracked pose. Such measured information might be obtained by comparing an expected relative position of the checkpoint with the observed position. Position in this sense might be limited to a direction of the checkpoint with respect to the second surveying device. No adjustment is performed using the checkpoints, thus position data associated with the checkpoints might be provided with lower accuracy than the rest of the control points. Particularly checkpoints might be pre-existing objects and/or might be provided by lower precision units, such as a laser scanner, and/or coordinates of checkpoints might be provided under less stringent conditions. Thus, orders of magnitude more checkpoints might be provided than control points usable for pose determination. Measuring the development of the pose uncertainty is beneficial for many aspects of the scan workflow. Particularly, it can be used to predict the pose uncertainty for future states with higher confidence than based on sensor characteristics alone. Thus, more efficient planning of the scan trajectory can be performed. Moreover, by recording the pose uncertainty a quality assessment on the acquired point cloud data can be performed. Advantageously, the higher quality data might be weighed more heavily than the lower quality data, during a stitching of the point cloud data from different sources.

In some specific embodiments, the system is configured to derive data regarding the scan trajectory based on an uncorrected scan trajectory constructed from the continuously tracked pose. By way of example, the second surveying device might record the continuously tracked pose and setup locations, where a measurement of a control point took place. Based on said measurements the true trajectory might be provided during post processing.

A potential workflow for the deriving of the scan trajectory comprises (i) moving the second surveying device along the scan trajectory, the scan trajectory comprising a first setup location and a second setup location, (ii) providing the unadjusted scan trajectory based on the continuously tracked pose data, the unadjusted scan trajectory comprising an unadjusted pose of the first setup location and an unadjusted pose of the second setup location, (iii) measuring the relative position of a third control point from the first setup location, (iv) deriving a pose of the first setup location based on the measured relative position of the third control point and third control point position data associated with the third control point, (v) deriving a first deviation based on the unadjusted pose of the first setup location and the pose of the first setup location, (vi) measuring the relative position of a fourth control point from the second setup location, (vii) deriving a pose of the second setup location based on the measured relative position of the fourth control point and fourth control point position data associated with the fourth control point, (viii) deriving a second deviation based on the unadjusted pose of the second setup location and the pose of the second setup location, and (ix) deriving the scan trajectory on the basis of the unadjusted scan trajectory, the first deviation and the second deviation using an error propagation function, in particular wherein the error propagation function is a linear error propagation function. Alternatively, the error propagation function might be derived based on a polynomial fit on a plurality of deviations between the true and unadjusted poses of a plurality of setup locations. In other words, the surveying device provides a continuously tracked pose during the movement along the scan trajectory. The drift of the unadjusted scan trajectory is then controlled at regular intervals and the true trajectory is then approximated based on these control measurements. The coordinates of the recorded object points are also adjusted in that manner. The skilled person understands that setup locations in the sense of the invention refer to the poses of the second surveying device from which such measurements are performed, i.e. they can be arbitrary points along the scan trajectory.

In some specific embodiments, the second surveying device is configured to generate position uncertainty data for a set of object points in the setting based on the scanning data, the pose data and the uncertainty of the pose data.

In some specific embodiments, the second surveying device is configured to perform an assessment based on an uncertainty threshold and the uncertainty of the pose data, and in particular approve a continuation of the collection of the scanning data.

In some embodiments, each of the plurality of surveying devices stores a unique device identifier associated with said surveying device. It is implicit from the purpose of said unique device identifier that it refers to digital data, which the surveying device can communicate to other surveying devices or the data management server. The unique device identifier might refer to the type of the surveying device, e.g. whether a respective surveying device is more appropriate for generating the control points or for performing the scanning. The unique device identifier might be an ex-factory identifier, enabling a backtracking of the history of the device. The unique device identifier might be locally assigned by the data management server.

The data management server stores the set of unique device identifiers. The data management server is also configured to perform a status check of a surveying device requesting communication with the data management server based on said set of unique device identifiers. The status check comprises (i) requesting, by the data management server, the unique device identifier of the surveying device communicating with the data management server, and (ii) denying the communication request of the surveying device if no data matching one of the unique device identifiers from the set of unique identifiers has been received from the surveying device within a time limit for the response. In other words, the inventive system can restrict data sharing to legitimate devices comprised by the system. As one primary use of the inventive system relates to large scale construction projects and/or industrial sites and/or large machinery the confidentiality of the data is often a central question.

In some specific embodiments, the status check is performed when the surveying device requests to contact the data management server and/or requests to access data stored in the data management server.

In some embodiments, a mobile computing device associated with the second surveying device. A mobile computing device might be realized as a field computer, a tablet, a smartphone, a general-purpose notebook or any suitable alternative. Such mobile computing devices are typically used for displaying various data. Key advantages, as compared to displays in the surveying device itself, that the size of the display can be larger, without making the surveying device itself cumbersome, or that data can be displayed independently of the activity performed by the surveying device. The mobile computing device is configured (i) to access position data associated with control points of at least a subset of the set of control points, (ii) to access the pose data of the second surveying device, and (iii) to display the pose of the second surveying device with respect to the position of the control points of the subset.

In some specific embodiments, the mobile computing device is further configured (i) to access or derive a navigation aid, particularly a map or a floorplan, regarding the setting, and (ii) to display the pose of the second surveying device and the pose of the control points of the second subset with respect to the navigation aid.

In some specific embodiments, the pose tracking unit is configured to provide an uncertainty regarding the tracked pose. Particularly the pose tracking unit might provide a warning message that the drift exceeds a threshold. It is beneficial to combine this embodiment with a navigation aid. The operator thus provided with the location of the nearest control point to reset the drift.

In some embodiments, (i) at least one of the plurality of surveying devices is configured to provide control point condition data relating to the perceivability of the unique ID, and (ii) the control point data comprises control point condition data. In some specific embodiments, the control point condition data is provided based on image data obtained by the imaging unit of the surveying device.

In some embodiments, the second surveying device comprises a contact area and configured to provide the relative position of the identified control point during touch contact between the control point and the contact area. Such embodiments are advantageous as direct contact between an appropriate element provides a reliable registration of the position of the contact area, particularly if the orientation of the surveying device is also fixed,. Such resetting of the drift, however, requires potentially cumbersome actions by the operator, which can also be time-consuming.

The present invention also relates to a method for providing a control point regarding a setting. The method comprises a provision of a set of control points and a recording of a point cloud.

The provision of the set of control points comprises (i) providing a first surveying device in communicative coupling with a data management server, (ii) measuring first position data by the first surveying device for a first control point preferably such that the position data meet geodetic accuracy standards, (iii) assigning first control point data comprising at least a first unique ID and first position data to the first control point, wherein the unique IDs are configured in such a way that they enable unambiguous identification of the assigned control points, (iv) communicating the first control point data to the data management server, and (v) based on the first control point data performing, by the data management server, at least one of (a) establishing a new set of control points, and (b) updating an existing set of control. It is clear for the skilled person that the data management server might store different sets of control points for different purposes. Thus, a control point of a first set might be remeasured and at the same time used for establishing a new set. Moreover, a part of the control points might be provided with lower measurement precision, particularly when said control points are used as checkpoints. The position data associated with the control points might comprise uncertainty data. Alternatively or additionally, the unique IDs might contain information regarding the nature of the control points, i.e. that they can only be used as checkpoints.

The recording of the point cloud comprises (i) providing a second surveying device in communicative coupling with the data management server, (ii) perceiving a second unique ID by the second surveying device, (iii) accessing at least a second position data of a second control point associated with the second unique ID, (iv) measuring a relative position of the second surveying device with respect to the second control point, (v) determining a pose and/or an uncertainty of the pose of the second surveying device under consideration of the measured relative pose of the second surveying device and the second position data, and (vi) measuring position data for a plurality of object points representing the setting by taking into account the determined pose of the second surveying device.

The above method is especially advantageous for the cases when the second surveying device is embodied as a mobile scanning instrument, which for the purpose includes both scanning devices mounted to a mobile platform or portable devices. Such devices typically have internal pose tracking instruments. The results of the inventive method can be used in two ways. In the first option the pose uncertainty is determined based on the expected and actual relative position of a checkpoint, said uncertainty is either recorded and further processed in determining the position uncertainty of the object points of the point cloud, or used as a qualitative measure, i.e. whether the pose uncertainty is within the tolerance limits. For that checkpoints whose position is known with a certain uncertainty might be applicable, provided that this uncertainty is below that of the tolerance limit. In the second option the pose uncertainty is corrected, particularly said correction can be back projected, thus the tracked scan trajectory is corrected to better reflect the actual trajectory. The second option requires control points whose real-world position is known with great precision.

The use of mobile scanning instruments is known from the prior art. Deriving point coordinates in the reference system comoving with the scanning device and transforming into an outside reference system based on a tracked pose is also known as such. As there are many alternatives for both, only specific examples will be mentioned in reference to the drawings. The skilled person is, nevertheless, based on the type of surveying device, can adapt the teaching to the selected pose tracking and scanning method.

The second surveying device might receive all control point related data from the data management server before and/or during the scanning action and perform the retrieval of the data internally. Alternatively, it might query the digital data which is stored on the data management server.

In some embodiments, the method further comprises an updating of a control point. Said updating of a control point comprises (i) accessing a pose of a surveying device, wherein the surveying device is configured to perceive unique IDs associated with control points, in particular as image data or on the basis of image data, (ii) accessing, by the surveying device, a set of control points and the associated position data and unique IDs, (iii) deriving a relative position of a selected control point based on the pose of the surveying device and accessed position data of a selected control point, (iv) obtaining perception data on the basis of the relative position of the selected control point, (v) determining control point condition data based on the obtained perception data, in particular wherein the control point condition data comprises data regarding the presence of the unique ID, (vi) communicating the unique ID and the control point condition data to the data management server, and (vii) based on the communicated unique ID and control point condition data performing, by the data management server, updating the existing set of control points or generating a new set of control points, in particular removing the selected control point associated with the unique ID from the set of control points or generating a set not comprising the selected control point, when the unique ID was missing from the perception data.

In other words, the surveying devices receive data regarding the expected location and/or condition of real-world elements of the control points, such as reference markers or RFID transceivers. The surveying device then determines whether the unique ID associated with a control point is perceivable and the perceived information corresponds to that of the expected unique ID. E.g. whether the reference marker is damaged and only a portion of the unique ID is retrievable. If the control point is not applicable anymore due to the above defects it is removed from the set of control points. Optionally a warning to generate a new control point is provided if the surveying device is a first surveying device. Alternatively, the existing set can be provided with a time stamp indicating that it is not applicable for processing point cloud data acquired after the time stamp. A new set of control points lacking the missing control point might be generated after.

The above-mentioned method is applicable, with corresponding straightforward alterations, to the cases wherein the control point is damaged in a manner that its unique ID has been altered, but still fulfils the criterion of a unique ID, or its position is shifted. The updated, or newly generated, set of control points would comprise the selected control point with is altered unique ID or position.

In some specific embodiments, the surveying device is the second surveying device, and the pose of the surveying device is the tracked pose of the second surveying device. An especially advantageous application of the inventive surveying system relates to the use of such mobile devices to monitor the state of the control points. As the devices configured to act as first surveying devices typically higher-end devices with higher prices they might be present in the setting only for limited amount of time. Thus, the ability to automatically manage the set of control points based on the feedback from lower-end surveying devices enables better planning of the scanning procedure.

In some embodiments, the data management server is configured to store a plurality of surveying projects and assigning surveying devices and sets of control points to each surveying project of the plurality of surveying projects. The skilled person understands that a large construction project or a survey of an industrial plant might comprise sub-projects, which are also surveying projects in the sense of the invention. The sub-projects might represent different stages, i.e. they relate to the same setting at different times. It is also evident that especially for such cases the surveying projects might overlap with each other, thus a given set of control points or surveying device might be attached to a plurality of such projects. As mentioned before, a given control point might be a part of a plurality of sets, particularly in a manner that the control point data comprise a time stamp relating to a time interval for which given control point data is applicable.

The method comprises (i) assigning at least one first surveying device and at least one second surveying device to at least one surveying project of the plurality of surveying project by the data management server, (ii) assigning a set of control points to the at least one surveying project, (iii) optionally generating or updating the first control point data, (iv) assigning the first control point to the assigned set of control points, (v) immediately updating the assigned set of control points and the at least one surveying project when the data management received the first control point data, and (vi) immediately providing to each of the at least one second surveying device assigned to the at least one surveying project the updated set of control points. The skilled person understands that the same workflow is applicable for the cases where control point data of a selected control point is modified or the selected control point is deleted.

Any numbering and lettering in this document, and particularly with regard to the inventive methods, shall not be construed to imply a sequence, a given temporal or spatial relationship. Such numberings are presented solely for the purpose of improving readability. It is also clear that the method steps can be performed in alternative manner. Particularly, the assignment of devices and control points to a surveying project can be performed in a separate act. Moreover, the provision of the control points and the generation of the point cloud might be performed as two or more distinct actions. Particularly for scanning a large object the generation of the point cloud might require multiple days.

### BRIEF DESCRIPTION OF THE DRAWINGS

By way of example only, specific embodiments of the invention will be described more fully hereinafter with reference to the accompanying figures, wherein:
Figures 1a-e show different embodiments of prior art surveying instruments;
Figure 2 shows schematically a step of generating the first control point by a first surveying device;
Figure 3 shows schematically a generation of the scanning data by a second surveying device;
Figure 4 schematically depicts a mobile computing device displaying the tracked pose of the second surveying device with respect to the position of the control points;
Figure 5 shows a high level schematic representation of the data exchange in an embodiment of the inventive system.
Figure 6a shows schematically, by a flowchart, the generation of a first control point.
Figure 6b shows schematically, by a flowchart, the rectification of the tracked pose of the second surveying device.
Figure 7a shows schematically the application of control points to correct a scanning trajectory of a mobile scanning device;
Figure 7b shows schematically the application of checkpoints to monitor the pose uncertainty of a mobile scanning device;
Figure 8 shows schematically the data communication during an update of a surveying project.

### SPECIFIC EMBODIMENTS OF THE INVENTION

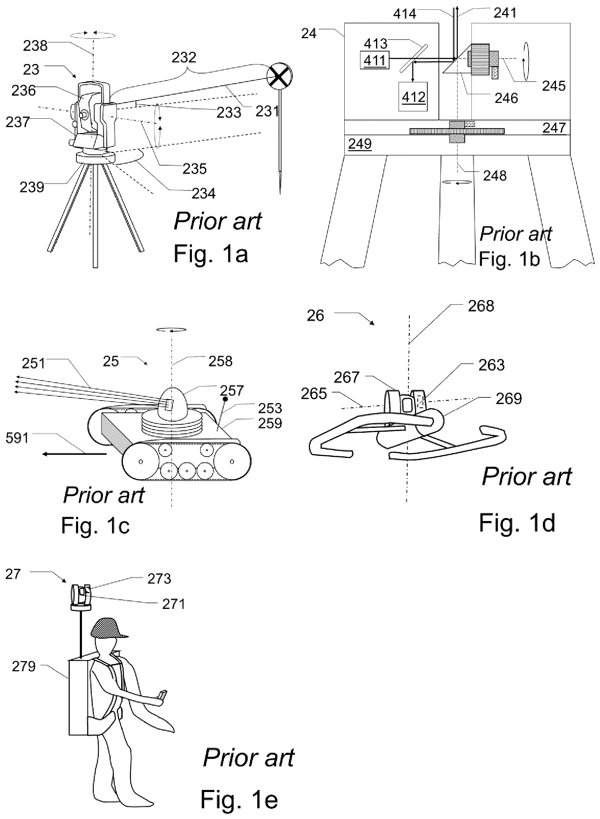

Figure 1a shows a prior art surveying instrument embodied as a total station **23** generating single point measurement data by emitting a measuring beam **231,** e.g. a laser beam. The total station **23** comprises a basis **239** providing a stable pose, which can be determined by known means, e.g. by measuring the relative coordinates with respect to known reference points. A frame **237** is mounted to the base **239** such that it is pivotable about a first axis **238.** Typically, the total station **23** is levelled during a measurement, i.e. the first axis **238** is vertical. A targeting unit **236** is mounted to the frame **237** such that it is pivotable about a second axis **235.** The second axis **235** is typically orthogonal to the first axis **238.** The corresponding first angle **234** representing a rotation about the first axis **238** and the second angle **233** representing a tilting about the second axis **235** is provided by respective motorized components and measured by corresponding encoders.

The targeting unit **236** comprises sighting elements and the hardware and software components enabling the aiming of the targeting unit towards a selected object in the setting. The targeting unit **236** is configured to emit a measuring beam **231** and to determine a distance **232** of a targeted object from the total station **23** based on a reception of a reflected signal from the object. Time of flight measurement of an emitted and reflected laser pulse is often used to determine the distance, but other alternative means are also applicable. The single point measurement data comprises a distance **232** from the total station **23,** the first **234** and second angles **233.** Owing to the setup and measurement methods total stations **23** are particularly suitable to act as a first surveying device.

Figure 1b shows a schematic embodiment of prior art surveying device embodied as a stationary laser scanner **24.** The laser source **411,** configured to emit periodic pulse trains. Periodic pulse trains for such instruments also comprise pulse trains modulated with a further periodic or a random modulating signal. The stationary laser scanner **24** comprises a support unit **247** mounted to a base **249** such that it is rotatable about a first axis **248** by a motor. The depicted stationary laser scanner **24** comprises a transmission unit with a rotating mirror **246,** which can be rotated about a second axis **245** by a corresponding motor. The transmission directions of the emitted laser pulse **241** thus depends on a first angle between the basis **249** and the support unit **247** and a second angle relating to a rotation state of the rotating mirror **246.** The stationary laser scanner comprises the corresponding angle measuring sensors to provide the first and second angles. The reflected pulses **414** coming from directions of object points are first redirected by the rotating mirror **246** towards the internal volume of the laser scanner **24.** A semitransparent mirror **413** redirects the return pulses **414** towards the acquisition unit **412.** Instead of a semitransparent mirror **413** a mirror with a specific transmission zone and a specific reflection zone might also be utilized, in particular a mirror with a hole as transmission zone.

Figure 1c shows a schematic embodiment of a prior art surveying device embodied as a UGV **25.** The depicted surveying device comprises a mobile frame **259,** capable of autonomous movement **591.** The surveying device **25** comprises a scanning unit **257,** in the depicted embodiment a profiler type scanning unit pivotable about a single axis **258,** for deriving scanning data. The depicted scanning unit **257** is a multi-beam scanning unit projecting a plurality of scanning beams **251.** Multibeam systems are known from the prior art, e.g. EP 3 816 657 A1 discloses such a system, the teaching of which is incorporated by reference. The coordinates of object points in the setting are thus determined based on the rotation state of the scanning unit **257,** the pose of the mobile frame **259** and a distance measurement based on processing the emitted and returned signals of the measurement beam **251.** The latter might comprise a step of associating the different bundles of emitted and return beams with each other. As the pose of the mobile frame **259** is paramount for the measurement the depicted system comprises a pose tracking unit **253,** depicted as a tracking target for an external laser tracker.

Figure 1d shows another prior art surveying device **26** embodied as a UAV. The support unit **269** on which the scanning element **267** is mounted is embodied as a drone. The depicted scanning element **267,** while some specific properties are optimized for use with aerial vehicles, is in broad terms similar to the static terrestrial scanning device as shown in Figure 1b. Particularly the scanning beam is pivotable about two, particularly orthogonal, axes **265,268** in a manner described with respect to Figure 1b. As the pose of the drone **269** is paramount for the measurement the depicted system comprises a pose tracking unit **263,** depicted as an INS.

Figure 1e shows a prior art surveying device embodied as a wearable lidar **27,** having a backpack **279** as support unit. The backpack **279** can be carried by the surveyor whom thus has her hand free to perform further activities. For the sake of simplicity the scanning unit **271** and the pose tracking unit **273** are assumed to be functionally similar to the previous embodiments.

The devices depicted in Figure 1b-1e, owing to their scanning nature are particularly suited for the role of a second surveying device. The skilled person understands that various combinations and alterations of these examples are possible. Moreover, while these devices are shown as examples of generic contemporary surveying devices, after suitable modifications, they can be utilized in the inventive system, respectively perform a corresponding step of the inventive method.

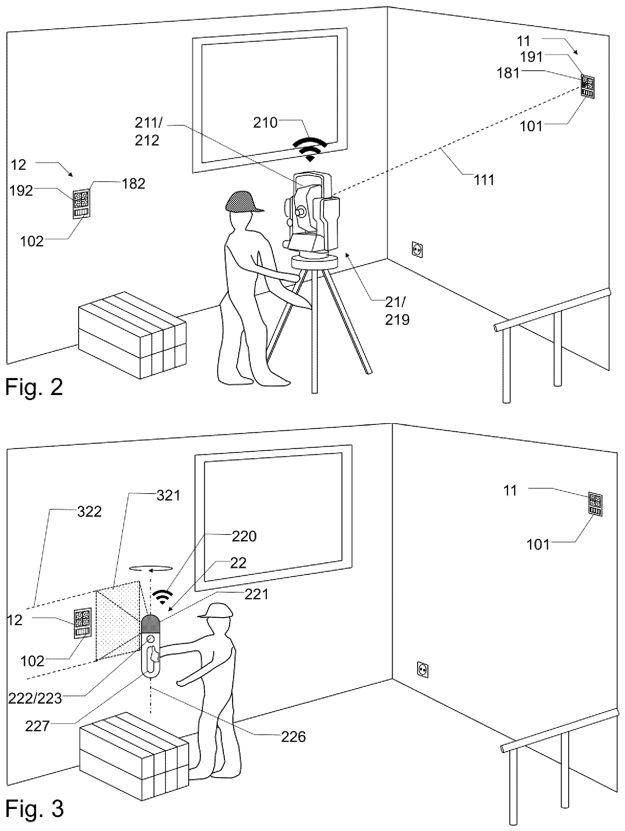

Figure 2 shows schematically a step from generating the control point data by a first surveying instrument **21,** depicted as a total station. The depicted setting, by way of example a part of a building under construction, shows two control points **11,12** with respective unique IDs **101,102.** The depicted control points **11,12** are adhesive markers sheets with reflective layer **191,192** having a crosshair **181,182** on the first side and an adhesive layer opposite side. The unique IDs **101,102** are depicted here as bar codes, such bar codes are visually perceivable and readable by respective detection system **212.** Adhesive markers, such as ArUco markers, without a layer with enhanced reflectivity are also known in the prior art and applicable with the present invention.

In the depicted embodiment control point **11** can be considered as a first control point **11.** Figure 2 depicts the step, when the first surveying device **21** measures first control point position data **111.** This is done such that the first surveying device **21,** as a total station, is aligned with a specific element, in this embodiment the crosshair **118,** representing the first control point **11.** The targeting unit **211** registers its alignment and the distance between the first control point **11** and the first surveying device **21,** e.g. by measuring the time of flight of a laser pulse between the first surveying device **21** and the first control point **11.** The first control point position data **111** associated with the first control point **11** is generated based on the above data and the known current pose **219** of the first surveying device **21.** The first surveying device **21** sends, using its communication unit **210,** the first unique ID **101** and the first control point position data **111** to the data management server as first control point data. The first control point data might comprise further data, particularly metadata regarding the measurement conditions, image data or an identifier of the first surveying device **21.** The first control point position data **111** might comprise a position uncertainty. By way of example, only control points whose position data fulfills certain accuracy requirements, particularly geodetic accuracy requirements, might be used for adjusting or deriving a pose of a second surveying device. The data management server, depending on the task, might establish a new set of control point data or update an existing set using the first control point data.

Figure 2 shows a situation wherein said control points **11,12** are already adhered to the wall, this might have been performed immediately precedent to the depicted measurement step. Alternatively, the control points **11,12** are part of a pre-existing set of control points. In the depicted embodiment an operator registers the control points **11,12** however nothing prevents a partly or fully automated registering.

Similar steps might be performed when the first surveying device **21** determines its current pose **219.** E.g. the control points **11,12** can be assumed to belong to a first subset of control points with known position and within line of sight from a current pose **219** of the first surveying device **21.** By using the detection system **212** the first surveying device **21** identifies the control points **11,12** based on the unique IDs **101,102.** Using the communication unit **210** of the first surveying device **21,** the first surveying device **21** accesses position data associated with a control points stored at the data management server. By measuring its relative pose with respect to the control points **11,12** the first surveying device **21** can determine its current pose **219.** E.g. EP 4 312 000 A1 discloses a method of deriving the pose of a stationary geodetic surveying device based on the measuring of a relative pose with respect to a plurality of reference markers with known (absolute) position. Said document, particularly the steps mentioned from Para [0028]-[0030], are hereby incorporated by reference. As the skilled person notices the depicted first surveying device **21** would have acted as a second surveying device, when performing the stationing steps.

Figure 3 shows schematically the step of acquiring the scanning data by the second surveying device **22.** The depicted second surveying device **22** is a portable scanner with a single rotational degree of freedom. The scanner comprises a support unit **227** configured to be held by the surveyor and a scanning unit **221** which is pivotable about an axis **226** of the support unit **227.** The depicted scanning unit **221** is a multibeam unit projecting a plurality of laser beams to a scanning window **321.** The scanning of the whole setting is performed by pivoting of the scanning unit **221** about the axis **226** of the support unit **227** as well as by moving the surveying device **22** along a scanning trajectory. Both actions displace the scanning window **321** and produce a trace **322** of scanned area. To gain the required own pose information such second surveying device **22** comprises a pose tracking unit **223.** In the depicted embodiment the pose tracking unit **223** is a VPS utilizing images collected by an imaging unit **222.** The scanning data corresponds to angular data associated with a relative orientation of the scanning unit **221,** data representing the geometry of the scanning window **321** distance data representing distances of object points in the scanning window from the scanning unit **221.** Position data for a set of object points in the setting is derived based on the scanning data and the tracked pose. Alternative portable scanner types, e.g. with fixed geometry and triangulation or photogrammetry-based evaluation are also known. The specific aspects of such scanners, particularly the way the scanning data is generated, are correspondingly applicable to the invention.

The inventive second surveying device **22** is configured to identify a second control point **12** based on the perceived unique IDs **102.** In the depicted embodiment this is performed as a result of observing, by the imaging unit **222,** the visually perceivable unique IDs **102** visited during the scanning action. The second surveying device **22** accesses, particularly using a communication unit **220** of the second surveying device **22,** pose data associated with a second control point **12** from the data management server. In some embodiments the control point data is accessed beforehand, and the second surveying device **22** can retrieve said data using its internal memory.

A relative position of the second control point **12** with respect to the second surveying device **22** is then determined, preferably this step is performed on the fly and in real time, however this step can also be carried out during a post-processing of tagged data. The relative position might be derived using a measurement by the scanning **221** or by the imaging unit **222.** The tracked pose of the second surveying device **22** is adjusted based on the measured relative position of the second control point **12** and the position data associated with the second control point **12.**

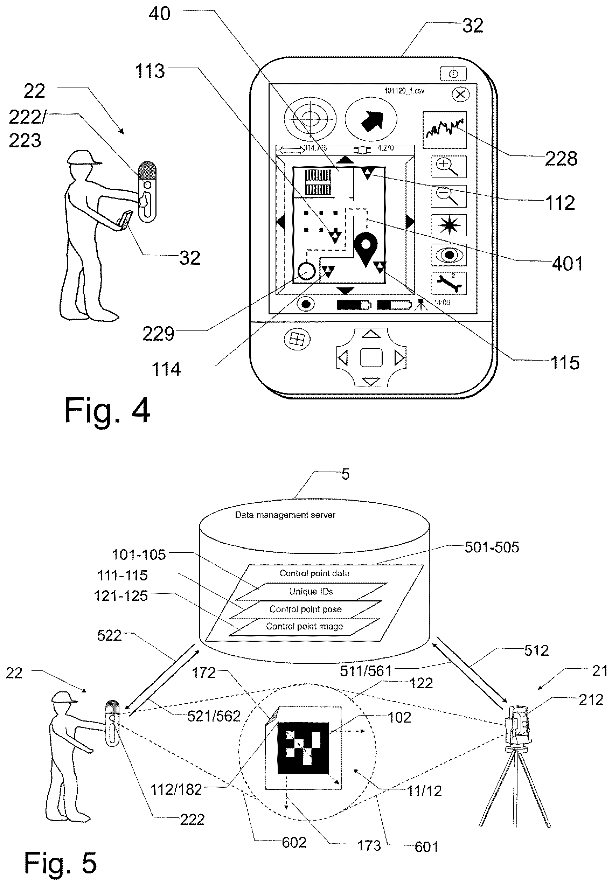

Figure 4 shows an operator carrying a second surveying device **22,** embodied as a handheld laser scanner, in a setting. The second surveying device comprises an imaging unit **222** providing imaging data for a pose tracking unit **223,** depicted as a VPS or VIPS, providing tracked pose **229** of the second surveying device **22.** The surveying system also comprises a mobile computing device **32** associated with the second surveying device **22.** The mobile computing device **32** displays a navigational aid **40** regarding the setting. The navigational aid **40** comprises the position **112-115** of the control points of a subset. The depicted mobile computing device **32** also displays the tracked pose **229** of the second surveying device **22.** The depicted mobile computing device also displays a scan trajectory **401** for completing the surveying task. The scan trajectory **401** might be calculated by talking into account the poses **112-115** of control points of the subset. Particularly the pose tracking unit **223** might calculate an uncertainty **228** of the tracked pose **229,** e.g. based on the known drift characteristics of the sensors or based on the observed position of checkpoints (not shown). The scan trajectory **401** might be altered by taking into account said uncertainty **228.** Particularly an approach of a control point might be planned if the uncertainty **228** exceeds a threshold.

Figure 5 illustrates some key elements of the inventive system and method, which are the data management server **5,** one or more first surveying device **21** (only one is shown for transparency reasons), one or more second surveying device **22** (only one is shown for transparency reasons), and a control point both in the role of a first **11** and second control point **12.** The depicted control point **11/12** is marked by specific markers such as the depicted ArUco marker. The first **21** and second surveying devices **22** are in communicative coupling **511,512,521,522** with the data management server **5.** I.e., they can retrieve **512,522** from or provide **511,521,561,562** data for the data management server **5.** Preferably data communication is maintained during a performance of the actual survey task. However, the present invention is applicable in combination with offline batch data transfer, i.e. wherein the survey devices retrieve **512,522** and store their internal data storage unit the necessary data before performing the survey task and provide **511,521** the collected survey data after the completion of said task.

The data management server **5** stores digital data about the setting. Said digital data comprise a set of control points data **501-505.** In the depicted embodiment each control point is associated with a unique ID **101-105,** with position data **111-115** and an image **121-125** regarding the control point. The position data **111-115** might comprise uncertainty information. The digital data might comprise further data, particularly it can comprise planning data regarding the setting, particularly in computer aided design or building information model format. The digital data might comprise a set of images and/or point cloud data collected regarding the past or current state of the setting.

By way of example, the control points might be represented by an ArUco marker. Such fiducial markers have a unique ID **102** enabling the identification of the control point **11/12.** The unique ID **102** is created such that alignment indicators **173** indicating a local coordinate system of the marker are observable. I.e. the black and white squares are arranged such that two orthogonal directions defining a plane and a third direction at the angle bisector is perceivable. Based on this information the top left corner of the marker, which is the targeting area **182** whose position **112** is associated with the control point **11/12,** can also be identified. The depicted marker is an adhesive marker, having an adhesive layer **172** on the backside.

The depicted first surveying device **21** comprises an imaging unit **212** configured to acquire **601** an image **122** relating to the control point **11/12.** Said image data **122** is provided **561** to the data management server **5.** The image data **122** might comprise or act as the corresponding unique ID **102.** The first surveying device **21** can also generate a first control point **11,** e.g. in the manner as shown in Figure 2, and provide **511** the corresponding first control point data to the data management server **5.**

The second surveying device **21** can retrieve **522** at least a part of the control point data **501-505,** particularly when performing a pose determination using a second control point **12** and/or when verifying the condition of a specific control point. The second surveying device **22** comprises an imaging unit **222** configured to acquire **602** an image **122** relating to the second control point **12.** Said image data **122** can be communicated **562** to the data management server **5** to identify the control point **12** and retrieve **522** the corresponding position data **112.** Alternatively, the image data **122** might be provided to verify the condition of the marker **12** and communicate **562** this piece of information to the data management server **5.** In the case shown, part of the adhesive layer **172** is detached, but the unique ID **102** is still intact.

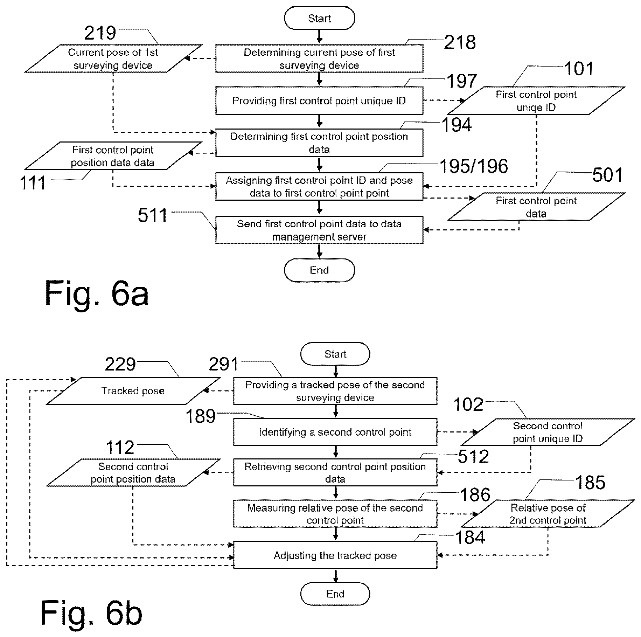

Figure 6a shows by a flowchart the steps of generating a first control point and the associated first control point data **501.** Flow/command lines are shown with bold while data lines are shown with dashed lines. Some flow- and/or data lines might not be shown in the schematic flowchart for transparency reasons. While the execution of some steps depends on the availability of certain data, reasonable variations in the sequence is possible. In the first step, the first surveying device determines **218** its current pose **219** using known pose determination means. These include the measurement of the distance and orientation of at least two control points or determining the orientation of at least three control points. The first surveying device might have a pose tracking unit providing a coarse tracked pose. Knowing the absolute pose is not strictly necessary for some workflows, particularly if a terrestrial laser scanner provides the first control point data **501,** said pose information can be derived from the context at a later stage. The skilled person can adapt the depicted method for such cases based on common general knowledge.

Using the known current pose **219** of the first surveying device first control point data **501** can be generated. The data assigned **195/196** to the first control point data **501** will be transmitted **511** to the data management server. The physical first control point might be a pre-existing control point, e.g. a marker or a cardinal feature of the setting, particularly the first control point might comprise a first unique ID **101.** The generating of the first control point/first control point data **501** in that sense corresponds to the collection of the required data. Alternatively, the physical first control point might be newly generated, e.g. a new marker is printed and placed on a desired location. The printer could be mounted or integrated with the first surveying device. The generation of the first control point data **501** comprises the performing, in sensible order, the steps of (i) determining **194** first control point position data **111,** (ii) assigning **195** the first control point position data **111** to the first control point data **501,** (iii) providing **197** a first unique ID **101,** and (iv) assigning **196** the first unique ID **101** to the first control point data **501.** The first unique ID **101,** particularly for control points based on cardinal features of the setting, might be embodied as or comprises an image.

Figure 6b shows schematically the steps required for adjusting **184** the tracked pose **229** of a second surveying device. A(n initial) tracked pose **229** is provided **291** by the pose tracking unit, e.g. based on an image based simultaneous localization and mapping method. A second control point is then identified **189** by detecting its unique ID **102,** e.g. observing a bar code corresponding to the second control point. Next the second control point position data **112** is retrieved **512,** particularly from the data management server, based on the second unique ID **102.** Then the relative position **185** of the second control point to the second surveying device is measured **186.** The skilled person understands that the relative pose of the second surveying device to the second control point is an equivalent measure. Based on the (absolute) position **112** of the second control point, the measured relative position **185** and the tracked pose **229** the tracked pose **229** is adjusted **184.** Particularly the corresponding filters of the pose tracking units are reseted.

As mentioned before alternatives of the above workflow are also possible. Particularly the second surveying device might perform a stationing based on the control point data. The stationing might be performed based on point cloud stitching, wherein the point cloud comprises the control points as anchor points. Moreover, the above-mentioned data retrieval **512** can be performed based on data store in the memory of the second surveying device.

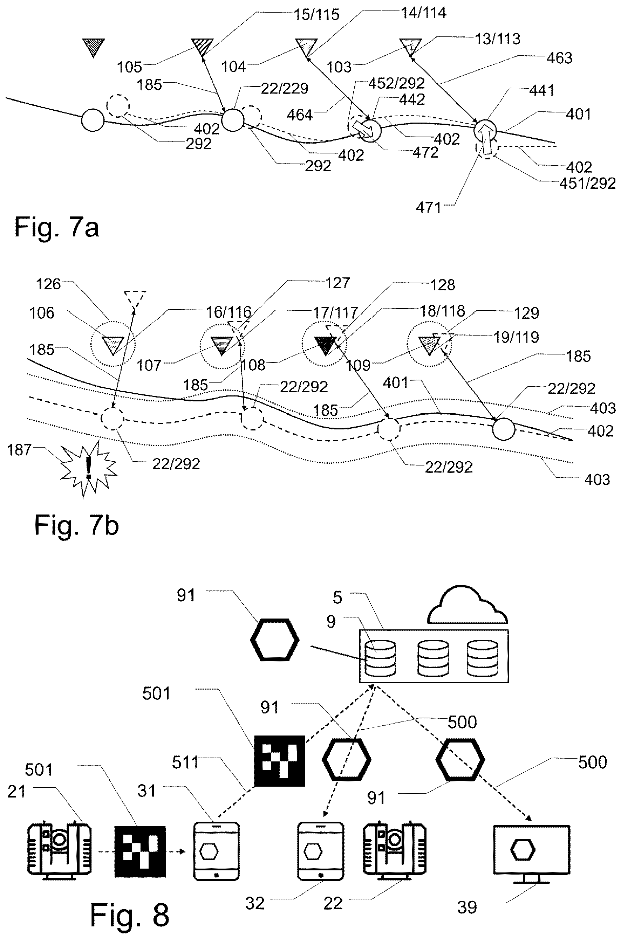

Figure 7a shows schematically an embodiment of using a subset of control points **13-15** to determine the pose **229** of a second surveying device **22,** propagating along a scan trajectory **401.** By way of example, said scanning trajectory **401** represents a continuous proper motion. The skilled person can apply the teaching to the cases which involve scanning trajectories **401** comprising a set of individual setup locations **441,442.** The control points **13-15** are associated with unique IDs **103-105,** represented by the different filling pattern in the Figure, and known absolute position **112-115** which can be retrieved based on the acquired unique ID. The second surveying device **22** comprises a pose tracking unit (not shown) delivering uncorrected tracked pose data **292** and uncorrected scan trajectory **402.** In the depicted embodiment the scan trajectory **401** is derived by controlling the deviations **471,472** between the unadjusted pose **451,452** of the setup locations **441,442,** i.e. the corresponding tracked pose **292,** and the pose derived by taking into account the measured relative position **463,464** of the control points **13-15.** The development of the error can be approximated on the basis of the deviations **471,472,** in particular if the control points are close enough to each other, a linear increase can be alleged.

The steps of the derivation of the scanning trajectory **401** comprises the moving the second surveying device **22** along the scan trajectory **401** with a first setup location **441** and a second setup location **442.** The tracked pose **292** is provided during said moving and based on said tracked pose **292** an unadjusted scan trajectory **402** can be formed. At a first setup location **441,** which can be an arbitrary point along the scan trajectory **401,** a relative position **463** of a third control point **13** is measured. Based on this measured relative position **463** and the known absolute position **113** of a third control point **13,** the pose data of the first setup location **441** can be derived. Based on the first setup location **441** and the unadjusted pose **451** of the first setup location, i.e. the associated tracked pose **292,** a first deviation **471** can be calculated. In the depicted embodiment the first deviation **471** is used for resetting the drift of the pose tracking unit. This step is optional and the scan trajectory **401** might be derived afterwards in post processing.

The second deviation **472** associated with the second setup location **442,** and can be provided in a similar manner based on the unadjusted pose **452** of the second setup location and the measured relative pose **464** of the fourth control point **14** and the associated fourth position data **114.** A relative position **185** of a further control point **15** can be also measured from a further setup location and said measurement can also be utilized for deriving the scan trajectory **401.**

Figure 7b shows schematically an embodiment of using a set of checkpoints **16-19** to determine the pose uncertainty of a second surveying device **22,** propagating along a scan trajectory **401.** The true scan trajectory, marked with a solid line, is not known **401.** In the depicted embodiment a pose tracking unit (not shown) provides a tracked pose **292** referenced to an external reference system. The sampling of the tracked pose **292** can be considered as essentially continuous and provided in between the depicted four points. From said tracked poses **292** an uncorrected trajectory **402,** marked with a dashed line, is derived. For many surveying tasks the pose uncertainty of the surveying device **22,** is not primary source of error for the point cloud coordinates, provided that difference between the true **401** and uncorrected scan trajectory **402** remains within a threshold **403.** Such threshold **403** is represented by the dotted line. This condition can be verified by measuring the relative position **185** of the checkpoints **16-19** and comparing with the absolute positions **116-119.**

The absolute position **116-119** of the depicted checkpoints **16-19** comprises a position uncertainty **126-129.** Since the position measurements are not used for deriving the true scan trajectory **401** or to update the tracked pose **292** this has minimal disadvantage. Moreover, owing to the relaxed requirements checkpoints **16-19** can be created more easily than control points used for pose adjustment. By way of example, the position uncertainty **126-129** of the checkpoints **16-19** might be comparable with the above-mentioned pose uncertainty threshold **403** for the second surveying device. The checkpoints **16-19,** as the further control points, are associated with corresponding unique IDs **106-109.** In the depicted embodiment the second surveying device **22** measures a relative position **185** of the checkpoints. The second surveying device **22,** then provides an assessment whether this relative position **185** is in compliance with the known absolute position **116-119,** position uncertainty **126-129** and the tracked pose **292** of the second surveying device **22.** If there is a correspondence the tracked pose **292** is approved, by lack of correspondence an error message **187** is provided. Alternatively or additionally, a numerical value regarding the pose uncertainty of the second surveying device **22** is determined, and particularly further utilized during a determination of the position uncertainty of the object points of the point cloud. In yet an alternative embodiment, a quality assessment is associated with the point cloud, and the stitching of the point clouds is performed under consideration of said quality assessments. In other words, the point clouds with lower pose uncertainty can be used to anchor the point cloud with higher pose uncertainty. The point cloud with higher pose uncertainty might be translated, rotated, and in particular strained to provide a matching.

Figure 8 shows schematically the management for control point data by a data management server **5** containing a plurality of surveying projects **9** (only one is shown with reference signs). For each surveying project **9** at least one first surveying device **21** configured for generating control point data and at least one second surveying device **22** configured for utilizing said control point data are assigned. In the depicted embodiment the first **21** and second surveying device **22** are the same type. The skilled person understands that many alternatives are possible, e.g. more than two surveying devices, different types of surveying devices. Moreover, the surveying devices might change role and may act as both as first **21** and second surveying devices **22** at different stages of the surveying project **9.** A set of control points **91** is assigned to the surveying project **9** and the surveying devices **21,22** assigned to the surveying project are enabled to access the surveying project data, particularly the assigned set of control points **91.** A given surveying device or control point can be assigned to a plurality of surveying projects.

The first surveying device **21** generates a first control point data **501,** represented by the unique ID, and provides **511** it to the data management server **5.** In the depicted embodiment this is performed via a field computer **31** associated with the first surveying device **21.** Generating the first control point data **501** also covers the cases, wherein said data is updated, particularly provided with a new time stamp. The data management server **5** updates the set of control points **91** assigned to the surveying project **9,** when it receives the first control point data **501.** Immediately thereafter the data management server **500** pushes the updates set of control points **91** to each of the second surveying devices **22** assigned to the surveying project **9.** In the depicted embodiment this is realized via field computers **32** associated with said second surveying devices **22.** Optionally the updated set of control points **91** can also be submitted **500** to an office computer **39** assigned to the surveying project **9.**

Although the invention is illustrated above, partly with reference to some specific embodiments, it must be understood that numerous modifications and combinations of different features of the embodiments can be made. All of these modifications lie within the scope of the appended claims.

## Claims

1. Surveying system for generating a point cloud representing a setting, the system comprising a plurality of surveying devices (21-27) and a data management server (5), wherein
- each surveying device (21-27) comprises a communication unit (210,220) for establishing data exchange with the data management server (5),
- the plurality of surveying devices (21-27) comprises a first surveying device (21) being configured
∘ to generate a first control point (11) and associate the first control point (11) with first control point data (501) comprising at least a respective first unique identifier (101) and first control point position data (111), and
∘ to send (511), using a communication unit (210) of the first surveying device (21), the first control point data (501) to the data management server (5),
- the data management server (5) is configured
∘ to store digital data about the setting, said digital data comprising a set of control point data (501-505) associated with a set of control points (11-19), the control point data (501-505) comprising at least unique identifiers (101-109) and position data (111-119) associated with given control points, and
∘ to update the set of control point data (501-505) based on the received first control point data (501),
- the plurality of surveying devices (21-27) comprises a second surveying device (22) comprising a pose determination unit (223) providing (291) pose data (229) of the second surveying device (22) and a scanning unit (221) for deriving scanning data, wherein the second surveying device (22) is configured
∘ to generate position data for a set of object points in the setting based on the scanning data and the pose data (229),
∘ to identify (189) a second control point (12) of the set of control points (11-19) based on a second unique identifier (102) associated with the second control point (12),
∘ to access (512), using a communication unit (220) of the second surveying device (22), second control point position data (112) associated with the second control point (12) from the data management server (5),
∘ to derive (184) the pose data (229) and/or an uncertainty (228) of the pose data (229) under consideration of a measured relative position (185) of the second control point (12) and the second control point position data (112).

2. The system according to claim 1, further comprising a set of markers associated with the corresponding control points (11-19) and each marker comprising an optically perceptible area displaying data representing unique identifiers (101-109) of the respective control points (11-19), in particular wherein
- the markers are embodied as sheets comprising a reflective layer (191,192) on a first side and an adhesive layer (172) on a second side opposite of the first side, and/or
- the markers comprise a targeting area (181,182) configured to be targeted by the first surveying device (21) during the determination of the first control point position data (111), and/or
- the optically perceptible area is embodied as a barcode or QR code or ArUco code,
more particularly wherein
- the markers comprise corresponding alignment indicators (173) indicating a local coordinate system of the markers, and
- the second surveying device is further configured to access second control point orientation data and to derive (184) the pose data (229) and/or an uncertainty (228) of the pose data (229) further considering a measured relative orientation of the second control point (12) and the second control point orientation data.

3. The system according to claim 2, wherein the first surveying device (21) comprises an imaging unit (212), wherein
- the imaging unit (212) of the first surveying device (21) is configured to acquire (601) a first control point image data (121) regarding the optically perceptible area, and
- the first control point data (501) comprises the first image data,
in particular, wherein the data management server (5) is configured to retrieve (561,562) the data associated with the control points (11-19) based on respective control point image data (121-125), more particularly wherein the unique identifiers (101-109) are based on the image data (121-125).

4. The system according to any one of the preceding claims, wherein the second surveying device (22) is configured to generate the position data for the set of object points during a continuous proper motion along a scan trajectory (401) and the pose determination unit (223) is configured to derive a continuously tracked pose (292),
in particular, wherein the second surveying device (22) is configured
- to be mounted to or integrated with an unmanned aerial vehicle (26), and/or
- to be mounted to or integrated with an unmanned ground vehicle (25), and/or
- to be mounted to or integrated with a mobile robot, and/or
- to be wearable (27) by a human, in particular to be embodied as or mounted into a backpack or an exoskeleton, and/or
- to be holdable by a single hand.

5. The system according to claim 4, wherein the pose tracking unit (223) comprises a visual positioning system,
in particular wherein
- the visual positioning system comprises a simultaneous localization and mapping functionality, and/or
- the visual positioning system is configured to track the identified control points based on a visual tracking of the respective unique identifiers (101-109), and/or
- the pose tracking unit (223) further comprises an inertial navigation system (263) cooperating with the visual positioning system.

6. The system according to any one of claims 4 to 5, wherein the pose tracking unit (223) is configured to provide an estimated uncertainty (228) regarding the pose data (229).

7. The system according to any one of claims 4 to 6, wherein the system, particularly the second surveying device (22) and/or the data management server (5), is configured to derive data regarding the scan trajectory (401) based on an uncorrected scan trajectory (402) constructed from the continuously tracked pose (292),
in particular by
- moving the second surveying device (22) along the scan trajectory (401) comprising a first setup location (441) and a second setup location (442),
- providing the unadjusted scan trajectory (402) based on the continuously tracked pose data (292), the unadjusted scan trajectory (402) comprising an unadjusted pose (451) of the first setup location (441) and an unadjusted pose (452) of the second setup location (442),
- measuring the relative position (463) of a third control point (13) from the first setup location (441),
- deriving a pose of the first setup location (441) based on the measured relative position (463) of the third control point (13) and third control point position data (113) associated with the third control point (13),
- deriving a first deviation (471) based on the unadjusted pose (451) of the first setup location (441) and the pose of the first setup location (441),
- measuring the relative position (464) of a fourth control point (14) from the second setup location (442),
- deriving a pose of the second setup location (442) based on the measured relative position (464) of the fourth control point (14) and fourth control point position data (114) associated with the fourth control point (14),
- deriving a second deviation (472) based on the unadjusted pose (452) of the second setup location (442) and the pose of the second setup location (442), and
- deriving the scan trajectory (401) on the basis of the unadjusted scan trajectory (402), the first deviation (471) and the second deviation (472) using an error propagation function, in particular wherein the error propagation function is a linear error propagation function.

8. The system according to any one of the preceding claims, wherein the set of control points (11-19) comprises a subset of checkpoints (16-19), and the second surveying device (22) is configured to derive an uncertainty (228) of the pose data (229) under consideration of a measured relative position (185) of one or more checkpoints (16-19),
in particular, wherein the second surveying device (22) is configured
- to generate position uncertainty data for a set of object points in the setting based on the scanning data, the pose data (229) and the uncertainty (228) of the pose data (229), and/or
- to perform an assessment based on an uncertainty threshold and the uncertainty (228) of the pose data (229) and in particular approve a continuation of the collection of the scanning data.

9. The system according to any one of the preceding claims, wherein
- each of the plurality of surveying devices (21-27) stores a unique device identifier associated with said surveying device (21-27),
- the data management server (5) is configured to store the set of unique device identifiers and is configured to perform a status check of a surveying device (21-27) requesting communication (511,512,521,522) with the data management server (5), in particular when said surveying device (21-27) requests to contact the data management server (5) and/or requests to access data (512,522) stored in the data management server (5), comprising
∘ requesting, by the data management server (5), the unique device identifier of the surveying device (21-27) communicating with the data management server (5), and
∘ denying the communication request of the surveying device (21-27) if no data matching one of the unique device identifiers from the set of unique identifiers has been received from the surveying device (21-27) within a time limit for response.

10. The system according to any one of the preceding claims further comprising a mobile computing device (32) associated with the second surveying device (22), wherein the mobile computing device (32) is configured
- to access position data associated with control points (12-15) of at least a subset of the set of control points,
- to access the pose data (229) of the second surveying device (22), and
- to display the pose (229) of the second surveying device (22) with respect to the position (112-115) of the control points (12-15) of the subset.
in particular, wherein the mobile computing device (32) is further configured
- to access or derive a navigation aid (40), particularly a map or a floorplan, regarding the setting, and
- to display the pose (229) of the second surveying device (22) and the position (112-115) of the control points of the subset with respect to the navigation aid (40).

11. The system according to any one the preceding claims, wherein
- at least one of the plurality of surveying devices (21-27) is configured to provide control point condition data relating to the perceivability of the unique identifier (101-109), and
- the control point data (501-505) comprises control point condition data,
in particular wherein the control point condition data is provided on the basis of image data obtained by the imaging unit (212,222) of the surveying device (21-27).

12. The system according to any one of the preceding claims, wherein the second surveying device (22) comprises a contact area and configured to provide the relative position (185) of the first control point (12) during a touch contact between the second control point (12) and the contact area.

13. A method for providing a point cloud regarding a setting, the method comprising a provision of a set of control points (11-19) and a recording of a point cloud, wherein the provision of the set of control points (11-19) comprises
- providing a first surveying device (21) in communicative coupling with a data management server (5),
- measuring (194) first control point position data (111) by the first surveying device (21) for a first control point (11),
- assigning (195) first control point data (501) comprising at least a first unique identifier (101) and first control point position data (111) to the first control point (11), wherein the unique identifiers (101-109) are configured in such a way that they enable unambiguous identification of the assigned control points (11-19),
- communicating (511) the first control point data (501) to the data management server (5), and
- based on the first control point data (501) performing, by the data management server (5), at least one of
∘ establishing a new set of control points, and
∘ updating an existing set of control points,
wherein the recording of the point cloud comprises
- providing a second surveying (22) device in communicative coupling with the data management server (5),
- perceiving a second unique identifier (102) by the second surveying device (22),
- accessing (522) at least a second control point position data (112) of a second control point (12) associated with the second unique identifier (102),
- measuring (186) a relative position (185) of the second surveying (22) device with respect to the second control point (12),
- determining a pose (229) and/or an uncertainty (228) of the pose (229) of the second surveying device (22) under consideration of the measured relative position (185) of the second surveying device (22) and the second control point position data (112),
- measuring position data for a plurality of object points representing the setting by taking into account the determined pose (229) of the second surveying device (22).

14. The method of claim 13 further comprising an updating of a control point, said updating comprising:
- accessing a pose (219,229) of a surveying device (21-27), the surveying device (21-27) being configured to perceive unique identifiers (101-109) associated with control points (11-19), in particular wherein the surveying device (21-27) configured to perceive the unique identifiers (101-109) as image data (121-125),
- accessing (512,522), by the surveying device (21-27), a set of control points (11-19) and the associated position data and the unique identifiers (101-109),
- deriving a relative position of a selected control point based on the pose (219,229) of the surveying device (21-27) and accessed position data of the selected control point,
- obtaining perception data on the basis of the relative position of the selected control point,
- determining control point condition data based on the obtained perception data, in particular wherein the control point condition data comprises data regarding the presence of the unique identifier (101-109),
- communicating (511,521) the unique identifier and the control point condition data to the data management server (5), and
- based on communicated unique identifier and control point condition data performing, by the data management server (5), updating the existing set of control points or generating a new set of control points, in particular removing the selected control point from the updated set of control points or generating a set not comprising the selected control point, when the unique identifier was missing from the perception data.

15. The method according to any one of claims 13 or 14, wherein the data management server (5) is configured to store a plurality of surveying projects and assigning surveying devices (21-27) and sets of control points to each surveying project of the plurality of surveying projects, the method comprising
- assigning at least one first surveying device (21) and at least one second surveying device (22) to at least one surveying project (9) of the plurality of surveying project by the data management server (5),
- assigning a set of control points (91) to the at least one surveying project (9),
- assigning the first control point (11) to the assigned set of control points (91),
- immediately updating the assigned set of control points (91) and the at least one surveying project (9) when the data management server (5) received (511) the first control point data (501), and
- immediately providing (500) to each of the at least one second surveying device (22) assigned to the at least one surveying project (9) the updated set of control points (91).
